# FASCICULE DE BREVET EUROPEEN

(11) **EP 0 698 146 B1**
(45) Date de publication et mention de la délivrance du brevet: **28.01.1998**
(21) Numéro de dépôt: 94914450.5
(22) Date de dépôt: 26.04.1994
(51) Int. Cl.: E01B 7/26, B61K 3/00, F16N 15/00, F16N 7/32

(54) **PROCEDE ET DISPOSITIF ET COMPOSITION POUR L'ENTRETIEN D'APPAREILS DE VOIE**
VERFAHREN, VORRICHTUNG UND ZUSAMMENSETZUNG ZUR EISENBAHNWEICHENWARTUNG
METHOD, DEVICE AND COMPOSITION FOR USE IN THE MAINTENANCE OF TRACK EQUIPMENT

(30) Priorité: 26.04.1993 FR 9304899
(43) Date de publication de la demande: 28.02.1996
(73) Titulaire: S.I.P.S., SOCIETE INDUSTRIELLE DE PRODUITS SPECIAUX, F-59155 Faches-Thumesnil (FR)
(72) Inventeur: FORTUNATO, Francis, F-59200 Tourcoing (FR)
(74) Mandataire: Wagret, Frédéric
(86) Numéro de dépôt international: FR9400476
(87) Numéro de publication internationale: WO9425674

(56) Documents cités:
- FR-A- 2 488 676
- GB-A- 2 004 955
- US-A- 4 262 776

## Description

La présente invention concerne un procédé, un dispositif et une composition destinés à l'entretien d'appareils de voie. L'invention trouve plus particulièrement application dans le domaine des appareils de voie de chemin de fer, et plus particulièrement encore d'aiguillages.

On sait que les appareils de voie de chemin de fer nécessitent des opérations de maintenance et d'entretien, relativement fréquentes, et consistant notamment à enduire les appareils de voie ou déposer sur ces derniers une certaine quantité de produits présentant des propriétés de lubrification, d'anti-rouille et de protection contre les intempéries.

De façon connue, ces produits ou compositions se présentent sous la forme d'une pâte relativement visqueuse voire très visqueuse ou même consistante, transportée dans des récipients, et appliquée sur les parties appropriées des appareils de voie, à l'aide d'un outil tel qu'une truelle, une spatule métallique souple ou une brosse.

Cette façon de procéder de l'art antérieur présente de nombreux inconvénients.

En premier lieu, la nature du produit utilisé, et plus particulièrement sa viscosité élevée, combinée avec les outils employés, oblige les opérateurs à travailler, soit à genoux, soit les jambes droites et le dos courbé vers le sol. On comprend aisément que ces postures soient extrêmement fatigantes et pénibles.

En second lieu, les techniques connues d'application de tels produits d'entretien, sont extrêmement longues. En effet, à titre d'exemple, l'entretien d'un aiguillage simple, nécessite 45 minutes à deux personnes. Cette durée relativement longue, multipliée par le nombre d'aiguillages à entretenir, ne serait-ce que sur un site de gare, conduit à immobiliser un grand nombre de personnes pour des durées extrêmement longues et incompatibles avec les impératifs économiques. Ceci est d'autant plus vrai qu'une personne supplémentaire est généralement nécessaire pour assurer la sécurité de l'équipe en train d'effectuer les opérations de maintenance.

En troisième lieu, les produits connus outre leur relative difficulté d'application, telle que mentionnée ci-dessus, sont peu satisfaisants sur le plan de l'entretien et de la maintenance. Dans le cas des aiguillages, on sait que la partie mobile de ces derniers se déplace sur un coussinet. Les produits connus, compte-tenu de leur grande viscosité et de leur nature, appliqués sur le coussinet et la partie mobile, ne remplissent pas leur rôle de lubrifiant pour la raison suivante. Lors de la manoeuvre de l'aiguillage, la partie mobile passe d'une première position extrême à une seconde position extrême, et ce faisant, provoque un effet de balayage du coussinet, et plus précisément un effet du type "essuie-glace" qui aboutit en fait à essuyer en quelque sorte le coussinet, et donc enlever le produit lubrifiant. Ceci déjà en soi va à l'encontre du but recherché. Cet effet de balayage ou d'essuie-glace présente une autre conséquence extrêmement dommageable, à savoir que le produit est repoussé vers les positions extrêmes de la partie mobile de l'aiguillage et il s'accumule aux positions extrêmes. Le produit accumulé, soumis aux intempéries, finit par durcir. Le produit durci ne peut être évacué dans ces positions, et il en résulte un blocage de la partie mobile après quelques manoeuvres de l'aiguillage car le produit accumulé durci forme une butée qui limite le mouvement de la partie mobile de l'aiguillage. Ceci est en soi extrêmement préjudiciable car la partie mobile est sensée présenter un débattement donné. Un débattement inférieur risque de mettre en danger le fonctionnement du dispositif et donc les trains susceptibles d'emprunter l'aiguillage. Ce débattement limité de la partie mobile de l'aiguillage soulève une autre difficulté majeure. La partie mobile des appareils de voie est généralement entraînée en déplacement par un moteur électrique. Ce dernier est mis en route à distance, et est maintenu en fonctionnement, jusqu'à ce que la partie mobile de l'aiguillage ait parcouru la course correspondant au débattement normal de la partie mobile. Or, le produit accumulé, après quelques manoeuvres, comme décrit précédemment, forme une accumulation empêchant la partie mobile de l'aiguillage de poursuivre sa course. La course maximale n'ayant pas été atteinte, le moteur continu d'être alimenté, alors qu'il est immobilisé et ne peut plus tourner. Il en résulte à terme un endommagement du moteur qui nécessite l'intervention d'une équipe spécialisée, et dans la plupart des cas le remplacement du moteur. Ces effets sont extrêmement dommageables sur le plan pécuniaire, du fait de l'intervention de l'équipe d'entretien qui doit intervenir pour réparer le moteur, outre le coût de ce dernier.

Une autre difficulté liée à l'utilisation des appareils de voie, est que, par définition, ces derniers sont situés en extérieur et soumis aux intempéries. Les appareils de voie, de façon connue, doivent être entretenus tous les 3 à 5 jours selon les fréquences de manoeuvre. Cette relative grande fréquence augmente le coût des opérations de maintenance. De plus, ces produits durcissent sous l'effet des conditions atmosphériques ce qui nécessite un nettoyage plus fréquent et fastidieux pour éviter tous risques de panne.

On connait le brevet US - 4,262,776 qui montre un système destiné à lubrifier un convoyeur de bouteilles, utilisé dans l'industrie de l'embouteillage de produits liquides. Le dispositif de lubrification comporte un réservoir relié à une pluralité de réserves distinctes de lubrifiants respectifs, de l'eau étant ajoutée dans le réservoir pour diluer les lubrifiants concentrés contenus dans les réserves; le produit liquide prêt à l'emploi est acheminé par pompage vers une bulle de pulvérisation disposée au dessus du convoyeur.

La présente invention, dans ce contexte, propose un procédé, un dispositif, et une composition destinés à l'entretien et la maintenance d'appareils de voie, tels que des aiguillages par exemple, qui permettent de réduire la fréquence de telles opérations, de réaliser ces dernières en un temps extrêmement court, avec les économies qui en résultent, tout en assurant le maintien des propriétés lubrifiantes du produit appliqué sur l'appareil de voie, pour une longue durée. Egalement, l'invention permet de réaliser ces opérations de maintenance sans fatigue, et en toute sécurité.

A cette fin, l'invention propose un procédé pour l'entretien d'un appareil de voie, du type comprenant au moins un élément mobile et un élément fixe appelés à porter l'un contre l'autre par une surface de contact, procédé du type dans lequel on dépose sur lesdites surfaces de contact respectives, une quantité donnée d'une composition lubrifiante comprenant une substance présentant des propriétés lubrifiantes, caractérisé en ce que ladite composition comprend au moins un solvant à fort coefficient d'évaporation.

De préférence, le dépôt est réalisé par projection d'un nuage de produit, vaporisation, pulvérisation ou extrusion.

L'invention concerne également un dispositif pour l'entretien d'un appareil de voie, et comprenant des moyens permettant de déposer sur les surfaces de contact de la partie mobile et de la partie fixe dudit appareil de voie, une quantité donnée d'un produit présentant des propriétés lubrifiantes et un solvant à fort coefficient d'évaporation, lesdits moyens d'application étant de préférence du type à vaporisation, pulvérisation ou extrusion.

La vaporisation, pulvérisation ou extrusion est effectuée de préférence à l'aide d'un gaz sous pression auquel est mélangée ladite composition lubrifiante et avantageusement à l'aide d'un temporisateur.

Selon une forme préférée de réalisation, le dispositif est constitué d'un ensemble portable à dos d'homme.

Selon un autre aspect de l'invention, cette dernière concerne une composition pour l'entretien d'appareils de voie, et comprenant d'une part au moins un corps présentant des propriétés lubrifiantes, et d'autre part au moins un solvant à fort coefficient d'évaporation.

De préférence, ladite composition comporte une huile de base, un agent améliorant de viscosité, un agent de glissement, un agent anti-usure, anti-oxydant et anti-rouille, un agent adhésif, et un agent répulsif de l'eau (hydrophobe).

Selon une forme préférée, la composition comporte en poids 20 à 80% de la composition décrite précédemment et 80 à 20% en poids d'un solvant à fort coefficient d'évaporation, tel que des solvants hydrocarbonés, oxygénés, chlorés, ou tout autre solvant approprié.

L'invention sera bien comprise à la lumière de la description qui suit, se rapportant à un exemple illustratif mais non limitatif de l'invention, se référant aux dessins annexés dans lequel:
La figure 1 montre un schéma de principe d'une forme de réalisation de l'invention;
Les figures 2 et 3 montrent une vue d'ensemble du dispositif, respectivement de dos et de côté de la partie portée du dispositif;
La figure 4 montre une vue arrière du bâti de portage;
La figure 5 montre la canne de pulvérisation en position active;
La figure 6 montre une vue de détail de l'interrupteur de pulvérisation; et
Les figures 7 et 8 montrent l'organe de pulvérisation, respectivement de face et de côté.

L'invention sera décrite ci-après dans un mode Illustratif de réalisation, mais non limitatif, et plus particulièrement dans une application liée à l'entretien et la maintenance d'appareils de voie de chemin de fer et encore plus particulièrement d'aiguillages, sans que bien entendu l'invention soit limitée à cette application.

Le dispositif comporte une réserve de gaz sous pression portant la référence 10, et un récipient 11 contenant le produit lubrifiant, prêt à l'emploi sous forme liquide. Le produit lubrifiant est mis sous pression par communication de la réserve 10 avec le récipient 11, par l'intermédiaire d'un bloc fonctionnel, appelé distributeur 12, lui-même relié d'une part par un conduit 13 à la réserve de gaz 10 et par un conduit 14 au conteneur 11. Le dispositif de l'invention comporte également un pulvérisateur 15 disposé à l'extrémité inférieure d'un tube rigide 16 formant une canne de pulvérisation. La longueur de cette dernière est telle qu'elle permette d'être saisie par son extrémité supérieure (opposée au pulvérisateur) par un utilisateur tandis que le pulvérisateur 15 est disposé sensiblement au niveau du sol où se trouve l'appareil de voie à entretenir. En variante, le conteneur 11 peut contenir du produit sous pression, sous forme d'une cartouche sous pression.

Le pulvérisateur 15 est du type connu en soi et est susceptible de permettre le mélange du gaz sous pression et du produit lubrifiant, de manière à engendrer une pulvérisation ou vaporisation contenant le produit mélangé à du gaz sous pression. Pour se faire le distributeur 12 recevant le gaz sous pression de la réserve 10 est relié au pulvérisateur 15 par l'intermédiaire d'un conduit 17, tandis qu'un conduit 18 relie le récipient 11 contenant le produit lubrifiant au pulvérisateur 15. En l'absence de pression dans le conteneur 11, on extrude le produit.

La canne 16 de pulvérisation comporte à son extrémité supérieure, de préférence, un interrupteur pneumatique 19, relié d'une part au distributeur 12 par un conduit 20 et d'autre part à un organe de temporisation 21 par un conduit 22. Le temporisateur 21 est lui-même relié par un conduit 23 à un organe de commande, tel qu'un clapet, portant la référence 24, et associé au pulvérisateur 15.

Ainsi, l'ensemble des conduits reliant les différents organes entre eux véhicule du gaz sous pression issu directement ou indirectement de la réserve 10, à l'exception du conduit 18 reliant le récipient 11 contenant le produit lubrifiant et le pulvérisateur 15.

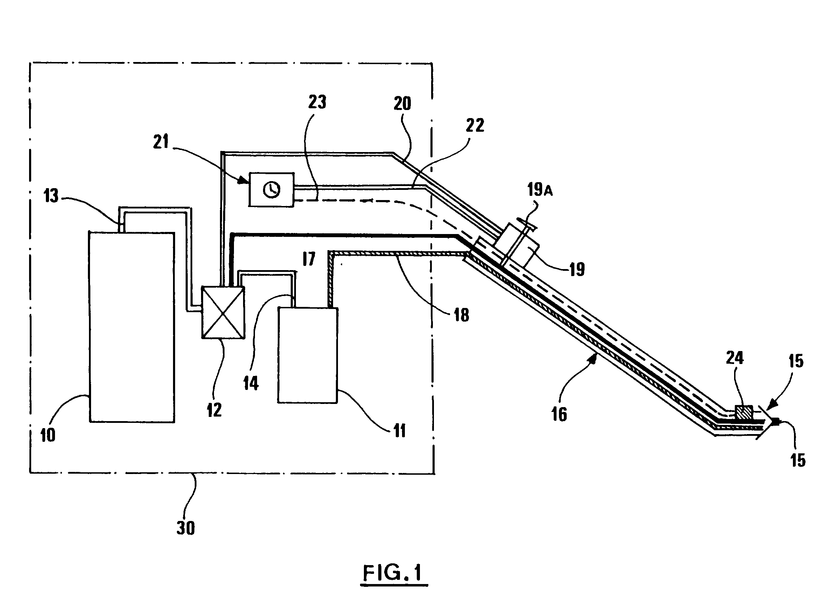

Il est entendu que la représentation de la figure 1 est schématique et en réalité certains des blocs fonctionnels regroupent des fonctions multiples. C'est le cas par exemple du bloc 12 référencé ci-dessus comme un distributeur, mais qui en fait peut comporter également des organes de réglage notamment des pressions du produit et de la pression de pulvérisation.

Le fonctionnement du dispositif, de façon schématique, est le suivant:
la réserve de gaz sous pression 10 et le récipient 11 étant respectivement remplis de gaz sous pression et de produit lubrifiant, l'utilisateur met en route l'appareil en déclenchant les ouvertures d'alimentation (connues en elles-mêmes). On suppose que les réglages préliminaires des pressions respectives de gaz de produit et de pulvérisarion ont été effectués. Il en est de même du réglage de la temporisation. A titre d'exemple, la pression du gaz dans la réserve 10 est de l'ordre de 3 à 7 bars, la pression de pulvérisation est de 0,5 à 3,5 bars, la pression du produit lubrifiant est de 0,5 à 3,5 bars, la durée de temporisation est de l'ordre de une seconde, et correspond au temps de pulvérisation.

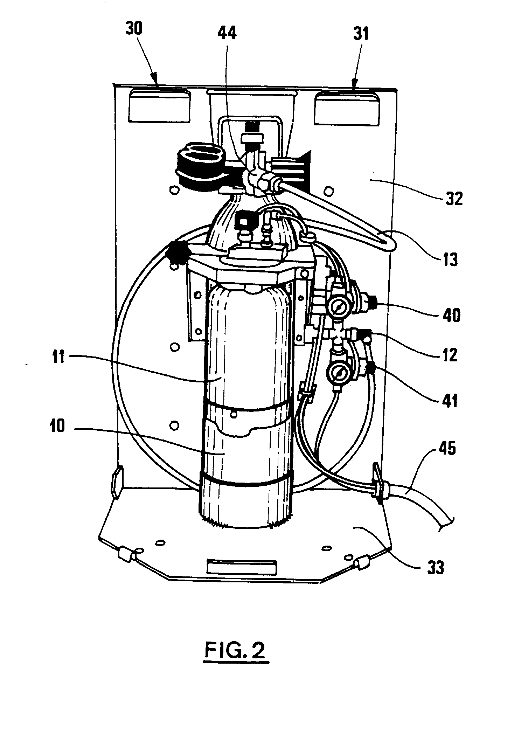

L'utilisateur place le dispositif sur son dos (à l'aide de moyens de portage (non représentés sur la figure 1 et décrit ci-après en référence aux figures 2 et suivantes); l'utilisateur saisit d'une main au moins, la canne de pulvérisation 16. Une poignée est prévue de préférence à proximité de l'interrupteur 19 de manière qu'un des doigts de l'utilisateur, de préférence le pouce, soit à même d'actionner le bouton 19A de l'interrupteur de temporisation 19.

En position normale, l'interrupteur est fermé, ce qui bloque l'alimentation en gaz du conduit 23 vers le temporisateur. Egalement, le clapet 24 du pulvérisateur est en position normale fermée. En appuyant sur le bouton 19A de l'interrupteur 19, l'utilisateur ouvre le circuit, et notamment le conduit 23 reliant le temporisateur 21 au clapet de fermeture 24 du pulvérisateur 15. Ainsi, le gaz sous pression issu de la réserve 10 est acheminé par le conduit 13, puis le distributeur 12, puis le conduit 20, puis le conduit 22, puis le conduit 23 vers le clapet 24 qu'il commande à l'ouverture. La durée d'ouverture du clapet 24 est calculée par le temporisateur 21. L'interrupteur 19 est du type à enclenchement unique, ce qui signifie qu'une seule pression sur le bouton 19A provoque l'ouverture du circuit, et ce quel que soit le temps effectif d'appui ou de pression sur le bouton 19A. Le clapet 24 étant ouvert, au niveau du pulvérisateur 15, le mélange issu des conduits 17 et 18, respectivement de gaz sous pression et de produit lubrifiant est réalisé et est projeté par pulvérisation au niveau de la buse 15A du pulvérisateur 15.

Le bloc en pointillé portant la référence 30 symbolise l'ensemble de portage à dos d'homme.

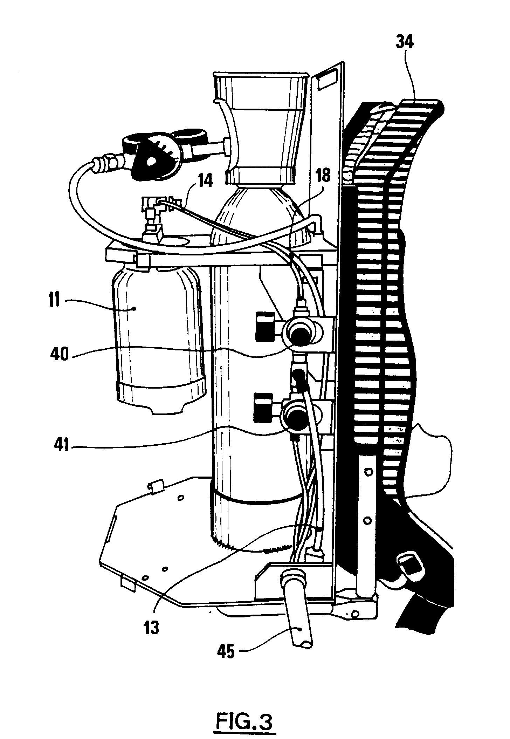

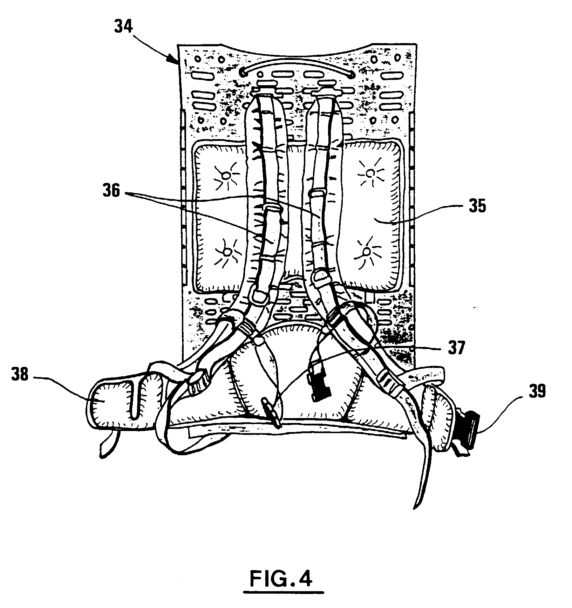

La description qui suit se réfère plus particulièrement aux figures 2 et 3 dans un premier temps. L'ensemble de portage 30, inclut selon la forme de réalisation représentée, un bâti 31 constitué d'une plaque verticale 32 et d'une plaque horizontale 33 fixée à angle droit sur l'arête inférieure de la plaque verticale 32. La réserve 10 de gaz sous pression, sous le forme d'une bonbonne d'air comprimé ou d'azote, connue en elle-même, est supportée directement par la plaque horizontale 33 servant de base. Un harnais 34, connu en lui-même et représenté de façon schématique en vue de côté sur la figure 3 et en vue de face sur la figure 4, est solidaire du bâti 31 et comporte de façon connue un coussin scapulaire 35 et deux bretelles de portage 36, ainsi qu'un coussin lombaire 37 associé à deux pattes de ceinture 38 et 39. Le harnais de portage 34 est connu en lui-même et s'inspire de la technique de portage des sacs à dos.

On retrouve sur les figures 2 et 3 le conduit 13 reliant la réserve 10 au distributeur 12. Ce dernier comporte de préférence deux vannes/ manomètres destinées au réglage de la pression respectivement du produit contenu dans le récipient 11, et de la pression de pulvérisation. A noter que le produit lubrifiant est mis en pression à l'intérieur du conteneur 11 par le gaz sous pression de la réserve 10 par l'intermédiaire des conduits 13 et 14. Le manomètre pression de produit porte la référence 40 et le manomètre pression de pulvérisation la référence 41.

Le conduit 13 reliant la réserve 10 de gaz sous pression et le distributeur 12 est associé à des moyens de réglage de la pression contenue dans la réserve 10, et permettant également de fermer l'alimentation en gaz sous pression issu de la réserve 10. Ces moyens connus en eux-mêmes, portent la référence 44.

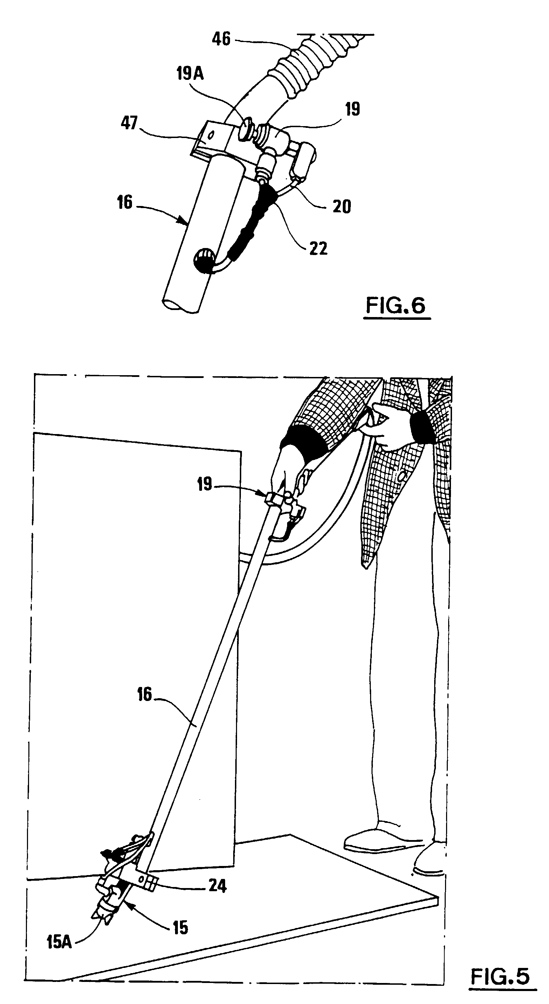

L'ensemble de portage 30 est relié à la canne de pulvérisation 16 par l'intermédiaire d'un tuyau souple 45 à l'intérieur duquel sont disposés un ensemble de cinq conduits, à savoir les conduits 17, 18, 20, 22 et 23 (voir figure 1). Les conduits 20 et 22 sont reliés à l'interrupteur de temporisation 19 décrit plus en détail à la figure 6, alors que la figure 5 montre une vue d'ensemble de la canne de pulvérisation 16.

La figure 6, montre une partie de la canne de pulvérisation, et notamment la partie médiane ou médiane supérieure incluant l'interrupteur de temporisation 19, juste au-dessus duquel est disposé un manchon 46 permettant la préhension par l'utilisateur, tel que montré plus particulièrement sur la figure 5. Le bouton 19A est pressé par le pouce de l'utilisateur (voir figure 5). L'interrupteur 19 de temporisation est par exemple fixé sur un collier 47 maintenu par serrage sur la canne de pulvérisation 16.

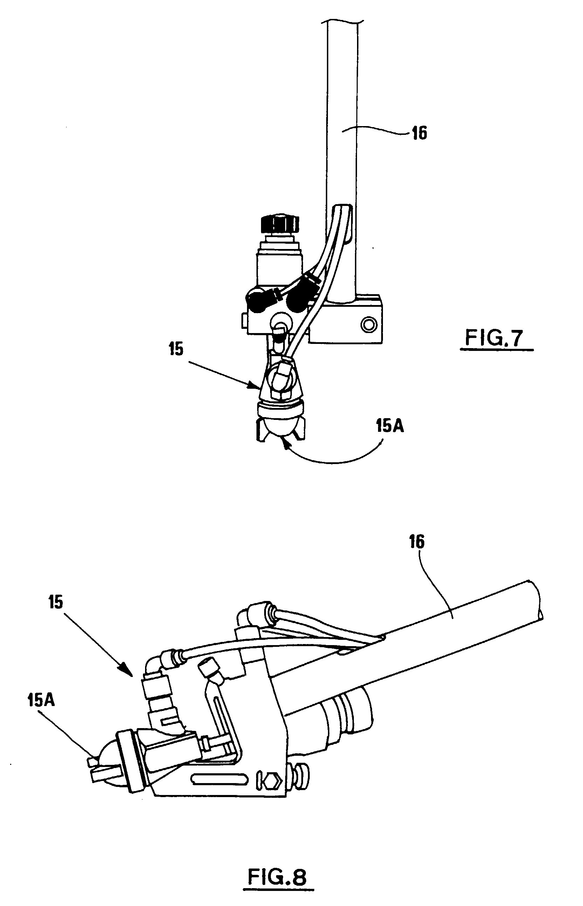

Les figures 7 et 8 montrent une vue de détail du pulvérisateur 15 disposé à l'extrémité de la canne de pulvérisation 16.

En référence à nouveau à la figure 1 on constate que les conduits 13 et 17 acheminent le gaz sous pression depuis la réserve 10 vers le pulvérisateur, tandis que le conduit 18 achemine le produit lubrifiant vers le pulvérisateur. Les conduits 20, 22 et 23 sont utilisés pour la commande du clapet 24 du pulvérisateur 15.

On comprend de ce qui précède que l'utilisation du dispositif de l'invention est extrêmement aisée et l'entretien et la maintenance des appareils de voie peuvent être réalisés de manière simple, rapide, efficace et sans fatigue.

L'invention présente également d'autres avantages, en ce sens qu'elle permet, par l'utilisation d'un produit ou d'une composition particulière, la vaporisation, pulvérisation ou extrusion d'un produit de lubrification et d'entretien qui soit susceptible de répondre aux conditions et aux normes requises pour l'entretien et la maintenance d'appareils de voie, tels que des aiguillages.

La composition lubrifiante proposée est telle qu'elle est susceptible d'être stockée sous forme concentrée, puis après mélange avec un solvant approprié, appliquée par vaporisation, pulvérisation ou extrusion sur l'appareil à entretenir.

Ceci présente un avantage extrêmement important, comparé à l'art antérieur, où les produits proposés présentent une viscosité ou consistance extrêmement importante, ce qui rend impossible ou extrêmement difficile l'application de tels produits autrement que par des outils à main, du type truelle, spatule ou brosse, avec les désavantages déjà mentionnés.

L'invention propose une composition lubrifiante comportant de préférence des agents de lubrification, sous la forme d'une huile de base, pour 20 à 80 % en poids de la solution prête à l'emploi. Le complément est constitué d'un solvant, tel que solvant hydrocarboné, oxygéné, chloré ou tout autre solvant approprié. De préférence la composition prête à l'emploi comprend le produit concentré pour 20 à 80 % en poids.

On donne ci-après des exemples de compositions constituant la partie concentrée, à laquelle du solvant est ajouté en vue de l'application.

### 1) HUILE DE BASE (20 à 40% en poids)

Telle que:
- Huile minérale (paraffinique, napthénique, aromatique).
- Huile animale végétale (en l'état ou polymérisée ou oxypolymérisée).
- Huile synthétique.

### 2) AGENT AMELIORANT DE VISCOSITE (25 à 60% en poids)

Tel que:
- Polymères et copolymères oléfiniques.
- Polymères et copolymères acryliques.
- Solutions de polymères basées sur les esters de l'acide méthacryliques.
- Gommes naturelles ou d'origine microbienne.

### 3) AGENT DE GLISSEMENT (0,5 à 4% en poids)

Tel que:
- Esters d'acide gras insaturé.
- Huile végétale et animale.

### 4) AGENT ANTI-USURE, ANTI-OXYDANT, ANTI-ROUILLE (0,5 à 5% en poids)

Tel que:
- Esters partiels d'acide phosphorique.
- Dithiocarbamates sans cendres, dithiophosphates d'amines, dialkyldithiophosphate de zinc ou aklyldithiophosphate de zinc.
- Composés à base de phosphore, soufre, azote et T.A.N.
- Préparations à base d'alkylphosphate neutralisé par une amine avec un dérivé aminé et un dérivé du phénol.

### 5) AGENT ADHESIF (1 à 8% en poids)

Tel que:
- Additifs du type poly-isobutylène, résines du pétrole, esters de colophane.

### 6° REPOUSSEUR D'EAU - ADDITIF REPULSIF DE L'EAU (2 à 10% en poids)

Tel que:
- Sels d'amines.
- Imidazoline.
- Semi-ester d'oxydat liquide transformé en sel de barium, ou sel de calcium.

Des tests et essais expérimentaux, réalisés par la demanderesse ont permis de constater qu'un aiguillage moyen pouvait être traité en quelques minutes par une personne. De plus, le retournement de l'aiguille n'est plus nécessaire lors de l'opération de lubrification, contrairement à l'art antérieur.

Egalement, la fréquence d'entretien peut être réduite à 15 à 20 jours. De même les opérations de nettoyage préalables ne s'imposent plus.

La composition de l'invention permet son application aisée, puis une fois le solvant évaporé, reste la partie active de la composition qui a pu être étalée uniformément sur les surfaces en contact de l'appareil de voie, sans qu'apparaisse l'effet néfaste dit "d'essuie-glace" de l'art antérieur.

L'invention n'est pas limitée au mode de réalisation décrit représenté mais inclut au contraire toutes variantes telles que mentionnées dans les revendications ci-après.
Par exemple l'invention est susceptible d'être appliquée à l'entretien et la maintenance de tout appareil de voie, ou tout autre appareil requièrant un entretien ou une maintenance par application d'un produit de lubrification.

Egalement le portage à dos d'homme peut être réalisé par une structure du type sac à dos, ou une structure porte-bouteille d'oxygène, utilisée en plongée sous-marine.

De même, la vitesse d'évaporation du solvant est déterminée en fonction notamment des conditions climatiques au lieu où l'appareil à traiter se trouve.

Egalement, le dispositif de l'invention est susceptible de traiter les appareils de voie et ses mécanismes (taquets, barrettes d'aiguillages, etc...).

## Revendications

1. Procédé pour l'entretien d'un appareil de voie comportant au moins un élément mobile et un élément fixe, chaque élément comportant une surface de contact appelée à porter contre la surface de l'autre élément, procédé du type dans lequel on dépose sur lesdites surfaces de contact respectives une quantité donnée d'une composition lubrifiante comprenant une substance présentant des propriétés lubrifiantes, caractérisé en ce que ladite composition comprend au moins un solvant à fort coefficient d'évaporation.

2. Procédé selon la revendication 1, caractérisé en ce que l'étape de dépôt consiste à vaporiser, pulvériser ou extruder ladite composition.

3. Dispositif pour l'entretien d'un appareil de voie comportant au moins un élément mobile et un élément fixe, avec chacun une surface de contact appelée à porter contre celle de l'autre élément, ce dispositif étant du type comportant des moyens (15,16,24,30) aptes à déposer sur les surfaces de contact respectives une quantité donnée d'une composition lubrifiante comprenant une substance présentant des propriétés lubrifiantes et au moins un solvant à fort coefficient d'évaporation.

4. Dispositif selon la revendication 3, caractérisé en ce qu'il comporte des moyens de vaporisation, pulvérisation ou extrusion (15).

5. Dispositif selon la revendication 4, caractérisé en ce qu'il comporte une réserve de gaz (10) sous pression auquel est destinée à être mélangée une quantité donnée de ladite composition (11).

6. Dispositif selon l'une des revendications 3 à 5, caractérisé en ce qu'il comporte un temporisateur (21) apte à interrompre l'application de ladite composition après un temps donné, correspondant à une quantité donnée de la composition.

7. Dispositif selon l'une des revendications 3 à 6, caractérisé en ce qu'il comporte des moyens (30,38) aptes à le rendre portable à dos d'homme, un outil préhensible à main d'homme, et des moyens propres à déposer la quantité donnée de ladite composition.

8. Dispositif selon la revendication 7, caractérisé en ce qu'il comporte un tube rigide (16) dont l'extrémité inférieure est pourvue de moyens (15) propres à vaporiser, pulvériser ou extruder ladite composition sur l'appareil de voie, et dont l'extrémité supérieure est reliée à des moyens d'alimentation (30) en composition, la longueur dudit tube étant telle qu'elle permette de déposer une quantité donnée de ladite composition, en station debout de l'opérateur.

9. Composition lubrifiante pour l'entretien d'un appareil de voie comportant au moins un élément mobile et un élément fixe avec chacun une surface de contact appelée à porter contre celle de l'autre élément, la composition étant susceptible d'être déposée sur lesdites surfaces de contact respectives et comprenant une substance présentant des propriétés lubrifiantes, caractérisée en ce qu'elle comporte au moins un solvant à fort coefficient d'évaporation.

10. Composition selon la revendication précédente, caractérisée en ce qu'elle comporte 20 à 80% en poids de ladite substance lubrifiante, et 80 à 20% en poids dudit solvant.

11. Composition selon la revendication précédente, caractérisée en ce que le solvant est choisi parmi les solvants hydrocarbonés, oxygénés et chlorés.

12. Composition selon l'une des revendications 9 à 11, caractérisée en ce qu'elle inclut une huile de base, telle que huile minérale par exemple paraffinique, napthénique, aromatique, huile animale végétale, en l'état ou polymérisée ou oxypolymérisée, huile synthétique.

13. Composition selon l'une des revendications 9 à 12, caractérisée en ce qu'elle comporte un agent améliorant de viscosité tel polymères et copolymères oléfiniques, polymères et copolymères acryliques, solutions de polymères basées sur les esters de l'acide méthacrylique, gommes naturelles ou d'origine microbienne.

14. Composition selon l'une des revendications 9 à 13, caractérisée en ce qu'elle comporte un agent de glissement tel que esters d'acide gras insaturé, huile végétale et animale.

15. Composition selon l'une des revendications 9 à 14, caractérisée en ce qu'elle comporte un agent anti-usure, antioxydant et antirouille tel que esters partiels d'acide phosphorique, dithiocarbamates sans cendres, dithiophosphates d'amines, dialkyldithiophosphate de zinc ou akyldithiohosphate de zinc, composés à base de phosphore, soufre, azote et T.A.N., préparations à base d'alkylphosphate neutralisé par une amine avec un dérivé aminé et un dérivé du phénol.

16. Composition selon l'une des revendications 9 à 15, caractérisée en ce qu'elle comporte un agent adhésif, tel que additifs du type polyisobutylène, résines du pétrole, esters de colophane.

17. Composition selon l'une des revendications 9 à 16, caractérisée en ce qu'elle comporte un additif répulsif de l'eau c'est-à-dire hydrophobe, tel que sels d'amines, imidazoline, semi-ester d'oxydat liquide transformé en sel de barium, ou sel de calcium.

## Patentansprüche

1. Verfahren zur Wartung einer Gleisanlage, insbesondere von Weichen, mit wenigstens einem beweglichen Element und einem feststehenden Element, wobei jedes Element eine zum Anliegen an der Oberfläche des anderen Elements bestimmte Kontaktfläche aufweist und es sich bei dem Verfahren um eines derjenigen handelt, bei denen eine bestimmte Menge einer Schmiermittelmischung mit einer Schmiereigenschaften aufweisenden Substanz auf die beiderseitigen Kontaktflächen aufgebracht wird, **dadurch gekennzeichnet,** daß diese Mischung wenigstens ein Lösungsmittel mit hohem Verdunstungs-Koeffizienten enthält.

2. Verfahren nach Anspruch 1, dadurch gekennzeichnet, daß das Aufbringen darin besteht, diese Mischung zu zerstäuben, aufzusprühen oder zu extrudieren.

3. Vorrichtung zur Wartung einer Gleisanlage, insbesonder von Weichen, mit wenigstens einem beweglichen Element und einem feststehenden Element, wobei jedes Element eine zum Anliegen an derjenigen des anderen Elements bestimmte Kontaktfläche aufweist und es sich bei dieser Vorrichtung um eine solche handelt, die geeignete Mittel (15, 16, 24, 30) aufweist, um auf den beiderseitigen Kontaktflächen eine bestimmte Menge einer Schmiermittelmischung aufzubringen, welche eine Substanz mit Schmiereigenschaften und wenigstens ein Lösungsmittel mit hohem Verdunstungs-Koeffizienten enthält.

4. Vorrichtung nach Anspruch 3, dadurch gekennzeichnet, daß sie Mittel zum Zerstäuben, Aufsprühen oder Extrudieren (15) aufweist.

5. Vorrichtung nach Anspruch 4, dadurch gekennzeichnet, daß sie einen unter Druck stehenden Gasvorrat (10) umfaßt, der dazu bestimmt ist, einer bestimmten Menge der erwähnten Mischung (11) beigemengt zu werden.

6. Vorrichtung nach einem der Ansprüche 3 bis 5, dadurch gekennzeichnet, daß sie ein Zeitrelais (21) aufweist, das in der Lage ist, das Aufbringen der erwähnten Mischung nach einer bestimmten Zeit, die einer bestimmten Menge der Mischung entspricht, zu unterbrechen.

7. Vorrichtung nach einem der Ansprüche 3 bis 6, dadurch gekennzeichnet, daß sie folgendes aufweist: Mittel (30, 38), mit deren Hilfe sie auf dem Rücken eines Menschen getragen werden kann, ein von Menschenhand greifbares Werkzeug sowie Mittel, mit denen die bestimmte Menge der erwähnten Mischung aufgebracht werden kann.

8. Vorrichtung nach Anspruch 7, dadurch gekennzeichnet, daß sie ein starres Rohr (16) umfaßt, dessen unteres Ende mit geeigneten Mitteln zum Zerstäuben, Aufsprühen oder Extrudieren der Mischung auf eine Gleisanlage versehen ist und dessen oberes Ende mit Mitteln zum Zuführen (30) der Mischung verbunden ist, wobei die Länge dieses Rohrs so gewählt ist, daß mit ihm das Aufbringen einer bestimmten Menge der erwähnten Mischung bei aufrecht stehender Bedienungsperson möglich ist.

9. Schmiermittelmischung zur Wartung einer Gleisanlage, insbesondere von Weichen, mit wenigstens einem beweglichen Element und einem feststehenden Element, wobei jedes Element eine zum Anliegen an derjenigen des anderen Elements bestimmte Kontaktfläche aufweist und die Mischung geeignet ist, auf die beiderseitigen Kontaktflächen aufgebracht zu werden und eine Substanz mit Schmiereigenschaften enthält, dadurch gekennzeichnet, daß sie wenigstens ein Lösungsmittel mit hohem Verdunstungs-Koeffizienten enthält.

10. Mischung nach dem vorhergehenden Anspruch, dadurch gekennzeichnet, daß die Substanz mit Schmiereigenschaft 20 bis 80% und das Lösungsmittel 80 bis 20% Prozent des Gewichts der Mischung ausmachen.

11. Mischung nach dem vorhergehenden Anspruch, dadurch gekennzeichnet, daß das Lösungsmittel aus den kohlenwasserstoffhaltigen-, sauerstoffhaltigen- und chlorhaltigen Lösungsmitteln ausgewählt ist.

12. Mischung nach einem der Ansprüche 9 bis 11, dadurch gekennzeichnet, daß sie ein Grundöl, wie z. B. ein mineralisches Öl, z. B. Paraffin-, Naphtha- oder Aromantenöl, tierisches Pflanzenöl, im polymerisierten oder oxypolymerisierten Zustand, oder ein synthetisches Öl enthält.

13. Mischung nach einem der Ansprüche 9 bis 12, dadurch gekennzeichnet, daß sie ein Mittel zur Verbesserung der Viskosität enthält, wie z. B. olefinische Polymere und Copolymere, Acryl-Polymere und Acryl-Copolymere, auf Methacrylsäureester basierende Polymer-Lösungen, natürlichen Gummi oder Gummi mikrobiellen Ursprungs.

14. Mischung nach einem der Ansprüche 9 bis 13, dadurch gekennzeichnet, daß sie ein Gleitmittel enthält, wie z. B. ungesättigte Fettsäurester, Pflanzenöl und tierisches Öl.

15. Mischung nach einem der Ansprüche 9 bis 14, dadurch gekennzeichnet, daß sie ein verschleiß- und oxydationshemmendes Rostschutzmittel enthält, wie z. B. partielle Phosphorsäureester, Dithiocarbamate ohne Asche, Amin-Dithiophosphate, Zink-Dialkyldithiophosphate oder Zink-Alkylditiophosphate, hergestellt auf Phosphorbasis, Schwefel, Stickstoff und T.A.N., Zubereitungen auf der Basis von durch ein Amin mit einem Aminderivat und einem Phenolderivat neutralisiertem Alkylphosphat.

16. Mischung nach einem der Ansprüche 9 bis 15, dadurch gekennzeichnet, daß sie ein Haftmittel enthält, wie z. B. Additive vom Typ Polyisobutylen, Petroleumharze, Harzester.

17. Mischung nach einem der Ansprüche 9 bis 16, dadurch gekennzeichnet, daß sie ein wasserabstoßendes, d. h. hydrophobes Additiv enthält, wie z. B. Aminsalze, Imidazolin, flüssige, in Bariumsalz überführte Halbester-Oxidationsmittel, oder Calciumsalz.

## Claims

1. Process for maintaining switch gear comprising at least one mobile element and one fixed element, each element comprising a contact surface intended to bear against the surface of the other element, process of the type in which there is deposited on said respective contact surfaces a given quantity of a lubricating composition comprising a substance presenting lubricating properties, characterized in that said composition comprises at least one solvent with a high coefficient of evaporation.

2. Process according to Claim 1, characterized in that the step of depositing consists in vaporizing, spraying or extruding said composition.

3. Device for maintaining switch gear comprising at least one mobile element and one fixed element, each with a contact surface intended to bear against that of the other element, this device being of the type comprising means (15, 16, 24, 30) adapted to deposit on the respective contact surfaces a given quantity of a lubricating composition comprising a substance presenting lubricating properties and at least one solvent with a high coefficient of evaporation.

4. Device according to Claim 3, characterized in that it comprises vaporizing, spraying or extrusion means (15).

5. Device according to Claim 4, characterized in that it comprises a reserve of pressurized gas (10) with which a given quantity of said composition (11) is intended to be mixed.

6. Device according to one of Claims 3 to 5, characterized in that it comprises a time delay relay (21) adapted to interrupt the application of said composition after a given time, corresponding to a given quantity of the composition.

7. Device according to one of Claims 3 to 6, characterized in that it comprises means (30, 38) adapted to render it portable on a man's back, a hand-gripped tool and means for depositing the given quantity of said composition.

8. Device according to Claim 7, characterized in that it comprises a rigid tube (16) of which the lower end is provided with means (15) adapted to vaporize, spray or extrude said composition onto the switch gear, and of which the upper end is connected to composition-supplying means (30), the length of said tube being such that it makes it possible to deposit a given quantity of said composition, the operator standing upright.

9. Lubricating composition for maintaining switch gear comprising at least one mobile element and one fixed element each with a contact surface intended to bear against that of the other element, the composition being capable of being deposited on said respective contact surfaces and comprising a substance presenting lubricating properties, characterized in that it comprises at least one solvent with a high coefficient of evaporation.

10. Composition according to the preceding Claim, characterized in that it comprises 20 to 80% by weight of said lubricating substance and 80 to 20% by weight of said solvent.

11. Composition according to the preceding Claim, characterized in that the solvent is selected from the hydrocarbon, oxygenated and chlorinated solvents.

12. Composition according to one of Claims 9 to 11, characterized in that it includes a basic oil such as mineral oil, for example paraffin, naphthene, aromatic oil, animal, vegetable oil, as it is or polymerized or oxypolymerized, synthetic oil.

13. Composition according to one of Claims 9 to 12, characterized in that it comprises a viscosity improving agent such as olefinic polymers and copolymers, acrylic polymers and copolymers, polymer solutions based on the esters of methacrylic acid, gums which are natural or of microbial origin.

14. Composition according to one of Claims 9 to 13, characterized in that it comprises a sliding agent such as unsaturated fatty acid esters, vegetable and animal oil.

15. Composition according to one of Claims 9 to 14, characterized in that it comprises an anti-wear, antioxidant and anti-rust agent such as partial esters of phosphoric acid, ashless dithiocarbamates, amine dithiophosphates, zinc dialkyldithiophosphate or zinc alkyldithiophosphate, compounds based on phosphorus, sulphur, nitrogen and T.A.N., preparations based on alkylphosphate neutralized by an amine with a amino derivative and a derivative of phenol.

16. Composition according to one of Claims 9 to 15, characterized in that it comprises an adhesive agent such as additives of the polyisobutylene, petroleum resins, colophony esters, type.

17. Composition according to one of Claims 9 to 16, characterized in that it comprises a water-repellant, i.e. hydrophobic, additive, such as salts of amines, imidazoline, semi-ester of liquid oxidate transformed into barium salt, or calcium salt.
